# EUROPEAN PATENT SPECIFICATION

(11) **EP 4 072 844 B1**
(45) Date of publication and mention of the grant of the patent: **06.12.2023**
(21) Application number: 20848966.6
(22) Date of filing: 10.12.2020
(51) Int. Cl.: B29D 30/24, B29D 30/26

(54) **FORMING DRUM FOR PRODUCING TYRES FOR VEHICLE WHEELS AND METHOD FOR CHANGING THE GEOMETRY OF A FORMING DRUM FOR PRODUCING TYRES FOR VEHICLE WHEELS**
FORMTROMMEL ZUR REIFENHERSTELLUNG FÜR FAHRZEUGRÄDER UND VERFAHREN ZUR ÄNDERUNG DER GEOMETRIE EINER FORMTROMMEL ZUR REIFENHERSTELLUNG FÜR FAHRZEUGRÄDER
TAMBOUR DE FORMAGE POUR LA PRODUCTION DE PNEUS DESTINÉS À DES ROUES DE VÉHICULE ET PROCÉDÉ POUR MODIFIER LA GÉOMÉTRIE D'UN TAMBOUR DE FORMAGE POUR LA PRODUCTION DE PNEUS DESTINÉS À DES ROUES DE VÉHICULE

(30) Priority: 11.12.2019 IT 201900023625
(43) Date of publication of application: 19.10.2022
(73) Proprietor: Pirelli Tyre S.p.A., 20126 Milano (IT)
(72) Inventor: CONTI, Davide, 20126 Milano (IT); DE COL, Christian, 20126 Milano (IT); PORTINARI, Gianni Enrico, 20126 Milano (IT)
(74) Representative: Porta & Consulenti Associati S.p.A.
(86) International application number: PCT/IB2020/061723
(87) International publication number: WO 2021/116954

(56) References cited:
- WO-A1-2008/152453
- WO-A1-2012/056409
- WO-A1-2012/073144

## Description

The present invention relates to a forming drum for producing tyres for vehicle wheels and a method for changing the geometry of a forming drum for producing tyres for vehicle wheels.

A tyre for vehicle wheels generally comprises a carcass structure, a crown structure arranged in radially outer position with respect to the carcass structure and a pair of sidewalls that represent the axially outer surfaces of the tyre, with respect to a mid-plane perpendicular to the rotation axis of the same tyre.

The carcass structure comprises at least one carcass ply formed from reinforcing cords incorporated in a matrix of elastomeric material. The carcass ply has opposite end edges respectively engaged with annular anchoring structures. The latter are arranged in the zones of the tyre usually identified with the name "beads" and are normally each formed from a substantially circumferential annular insert or "bead core" on which at least one filling insert is applied, in radially outer position, radially tapering moving away from the rotation axis.

At the beads it is possible to provide specific reinforcing structures having the function of improving the transmission of torque to the tyre.

In the case of "tubeless" tyres, i.e. without air chamber, a layer of elastomeric material, generally known as "liner", can also be provided in radially inner position with respect to the carcass structure to provide the necessary impermeability to the inflation air of the tyre. Generally, the liner extends from one bead to another.

The crown structure comprises a belt structure and, in radially outer position with respect to the belt structure, a tread band made of elastomeric material.

The belt structure comprises a belt layer, or many belt layers arranged radially juxtaposed over one another, having textile or metallic reinforcing cords having orientation substantially parallel to the direction of circumferential extension of the tyre (zero degrees layer) and/or having crossed orientation.

Between the carcass structure and the belt structure it is possible to provide a layer of elastomeric material, called "underbelt", having the function of making the radially outer surface of the carcass structure as even as possible for the subsequent application of the belt structure.

Longitudinal and transversal grooves are typically shaped on the tread band, arranged to define a desired tread pattern. Between the tread band and the belt structure it is possible to interpose a so-called "underlayer" of elastomeric material of properties suitable for obtaining a stable union of the belt structure with the tread band itself.

The sidewalls are made of elastomeric material and represent the axially outer surfaces with respect to the annular anchoring structures, to the carcass ply(-ies), to the belt layer(s) and possibly to at least one portion of tread band. For example, the sidewalls each extend from one of the lateral edges of the tread band up to the respective annular anchoring structure to the beads.

The term "elastomeric material" is meant to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be crosslinked through heating, so as to form the manufactured end product.

The term "green tyre" is meant to indicate a tyre obtained from the building process and not yet molded and vulcanized.

The term "finished tyre" is meant to indicate a tyre obtained by subjecting a green tyre to a molding and vulcanization process.

The term "tyre" is meant to indicate a finished tyre or a green tyre.

The terms "axial", "axially", "radial", "radially", "circumferential" and "circumferentially" are used with reference to a forming drum used in the production process of the tyre.

In particular, the terms "axial" and "axially" are meant to indicate references/magnitudes arranged/measured or extending in a direction substantially parallel to a geometric rotation axis of the forming drum.

The terms "radial" and "radially" are meant to indicate references/magnitudes arranged/measured or extending in a direction substantially perpendicular to a geometric rotation axis of the forming drum and lying in a plane comprising such a geometric rotation axis.

The terms "radially inner/outer" are meant to respectively indicate a position closer to or further from the aforementioned geometric rotation axis of the forming drum.

The terms "axially inner/outer" are meant to respectively indicate a position closer to or further from a mid-plane perpendicular to the geometric rotation axis of the forming drum.

The terms "circumferential" and "circumferentially" are meant to indicate references/magnitudes arranged/measured or extending along a circumference that extends around the geometric rotation axis of the forming drum.

The term "structural component" of a tyre is meant to indicate any portion thereof capable of performing its function or a part thereof. Examples of structural components of the tyre are the following components: the carcass structure, the crown structure, or parts thereof, like liner, underliner, anti-abrasion inserts, bead core, filling inserts in the bead zone (and thus the annular anchoring structures defined by bead cores and respective filling inserts), carcass ply(-ies), belt layer(s), belt sub-layer, underlayer of the tread band, sidewalls, sidewall inserts, tread band, textile or metallic reinforcements, reinforcing elements made of elastomeric material etc., or a part thereof.

The term "tyre being processed" is meant to indicate a tyre in any step of the relative production process that goes from the building of at least one structural component constituting the carcass structure and/or the crown structure up to obtaining the finished tyre. For example, a tyre being processed is that which enters/exits into/from the work station dedicated to the application of the annular anchoring structures on the opposite end edges of the carcass ply(-ies) previously deposited on a forming drum and to the turning up of such end edges around the aforementioned annular anchoring structures.

The term "machine down times" is meant to indicate the time period in which a tyre production plant is not operating due to format change operations ("setup") of the production batches.

The production cycles of a tyre provide that, after a building process of a green tyre in which the various structural components of the tyre itself are built and assembled, the green tyres are transferred into a molding and vulcanization line where a molding and vulcanization process adapted for defining the structure of the finished tyre according to a desired geometry and tread pattern is carried out.

The building of the structural components of the tyres and their subsequent assembly takes place on suitable forming drums. For example, the carcass structure can be built on a first forming drum, known as first stage drum, and the crown structure can be built on a second forming drum, known as auxiliary or second stage drum. The assembly of the carcass structure to the crown structure can take place on the first forming drum in which case the first stage drum takes the name "unistage" drum or on a different forming drum, known as shaping drum.

WO 2009/058296 discloses a forming drum comprising a plurality of modules releasably mounted around the drum to define a cylindrical work surface. A first and second locking stop are mounted at the opposite ends of the modules and respective receivers are mounted on a mounting ring of the drum. The locking stop comprises a projection intended to be inserted in a groove of the receiver. Each locking stop comprises a housing containing a rotating lever rotationally pushed by a spring to engage a pin arranged in the receiver. The automatic fastening of the housing of the locking stop to the pin of the receiver occurs when the projection of the stop is completely inserted in the groove of the receiver. In order to disengage the locking stop from the receiver, a release pin is mounted in the housing of the stop to engage and rotate the rotating lever and to provide for the application by a user of a force sufficient to produce the disengagement of the lever from the pin.

WO 2012/056409 to the same Applicant discloses a forming drum comprising a plurality of circumferential sectors arranged consecutively around a central body. A snap device is provided to associate and remove the circumferential sectors from the central body of the drum. The snap device comprises a fixed fastening element associated with a sector that extends in the radial direction from a radially inner surface of the sector and that is adapted for being received snugly in a radial opening formed in an arm of the central body. A mobile fastening element arranged axially in the arm of the central body faces the radial opening and is constantly pushed into the radial opening by a spring. The fixed fastening element comprises at least one ramp adapted for interacting with the mobile fastening element to cause the movement thereof from an active position to a passive position and produce the engagement thereof in a seat of the fixed fastening element activating the snapping of the fastening device. A release element can be inserted in a sliding seat of the fixed fastening element to reach the mobile fastening element and take it back into the passive position removing the constraint with the fixed fastening element.

The Applicant has observed that depending on the fitting diameter of a finished tyre, the diameter of the deposition surface of the forming drum necessary to make it is different. In particular, the Applicant has observed that as the fitting diameter increases/decreases, the diameter of the deposition surface of the forming drum necessary to make that model of tyre increases/decreases.

The Applicant has felt the need to manage the forming drums without having to provide a specific store of large size necessary for the storage of drums having deposition surfaces of different diameters, whilst still ensuring the possibility of making tyres with different fitting diameters.

The Applicant has observed that the forming drum described in document WO 2012/056409 allows to replace the sectors that make up the deposition surface of the forming drum to change the diameter of the deposition surface, allowing to use a same forming drum with different sets of circular sectors to provide deposition surfaces of different diameters.

The Applicant has noted that the snap engagement device described in document WO 2012/056409 allows to easily activate and deactivate the constraint between the curved sector and the central body of the forming drum.

The Applicant has indeed verified that, in the activation step of the constraint between curved sector and central body of the forming drum, the fixed fastening element provided on the radially inner surface of the curved sector inserts with a precise shape coupling in the radial opening provided on the arm of the central body of the forming drum that acts as insertion guide for the fixed fastening element. The fixed fastening element activates the mobile fastening element coming held by it in the radial direction.

The Applicant has however noted that, in particular in relation to modern highly automated building lines, it is very advantageous to proceed to changing sectors of the forming drum as quickly as possible to reduce the machine down times (and therefore "line shutdown") without however giving up the ease of performing the change of sectors.

The Applicant has thus observed that the change of sectors provides for the removal of the sector (after the latter has been released from the central body of the forming drum) taking the sector away from the respective seat provided in the central body of the forming drum. Similarly, during the connection of new sectors, it is provided for to position the new sector (before the latter is constrained to the central body of the forming drum) inserting the sector in the seat provided in the central body of the forming drum.

The Applicant has also observed that the speed and ease of changing sectors are functions both of the activation and deactivation operations of the constraint between sectors and central body of the forming drum, and of the removal and positioning operations of the sectors.

The Applicant has perceived that the removal of the sector from the central body and, particularly, the positioning of the new sector on the central body are facilitated in the absence of forced alignments and precise shape couplings between the sector and the central body. Indeed, in the presence of forced alignments and precise shape couplings between the sector and the central body, the positioning of the new sector needs the new sector to be oriented with precision with respect to the central body and the new sector to be moved towards the couplings between the sector and the central body, the positioning of the new sector needs the new sector to be oriented with precision with respect to the central body and the new sector to be moved towards the central body without losing the precise orientation found, whereas the removal of the sector needs the sector to be moved away from the central sector while maintaining the precise alignment requirement by the shape coupling.

The Applicant has thus found that by providing a clearance between sector and central body of the drum when the constraint between sector and central body is deactivated, the removal of the sector from the central body and the positioning of the sector on the central body can take place quickly and with ease since it is possible to exploit the quoted clearance to compensate for possible small misalignments in the insertion and removal step of the sector from the central body.

The present invention therefore relates, in a first aspect thereof, to a forming drum for producing tyres for vehicle wheels according to claim 1.

The Applicant deems that the forming drum according to the present invention makes it possible to speed up and facilitate the change of sectors. Indeed, the first element and the second element of the coupling members when they are in the respective holding conditions lock together the sector and the central body of the forming drum. When the second element is in the release condition, the sector and the central body are not axially locked together, allowing the movement of the first element in the release condition (thus radially releasing the sector from the central body) and making an axial clearance between sector and central body that allows a relative sliding between sector and central body even faced with small misalignments between sector and central body.

In a second aspect thereof, the invention relates to a method for changing the geometry of a forming drum for producing tyres for vehicle wheels according to claim 9.

The Applicant deems that, in this way, at every replacement the sector to be removed can be taken away from the central body without the second portion of the second element preventing axial movements of the sector and without the first element preventing radial movements of the sector. The new sector to be inserted can be taken towards the central body and positioned on it without the second portion of the second element preventing axial movements of the new sector and without the first element preventing radial movements of the sector. This makes it possible to make both an axial and radial clearance during the insertion/removal of the sector, facilitating and speeding up the sector change operations. For example, in the case of the sector moving radially away from the central body and the new sector moving radially towards the central body, the axial clearance allows a relative sliding between sector and central body even faced with small misalignments in the axial direction between sector and central body. In the case of the sector moving axially away from the central body and the new sector moving axially towards the central body, the radial clearance allows a relative sliding between sector and central body even faced with small misalignments in the radial direction between sector and central body.

In at least one of the aforementioned aspects, the present invention can have at least one of the preferred features described hereinafter.

Preferably, the first element moves on a radial plane between the holding condition and the release condition and between the release condition and the holding condition to engage and disengage the first portion of the second element.

In this way, the first element moves on a plane substantially perpendicular (a radial plane) with respect to the (axial) direction along which the second element moves.

Preferably, the first element carries out a rotation around an axial direction to pass from the holding condition to the release condition and to pass from the release condition to the holding condition.

Preferably, disengaging the first element from the first portion of the second element comprises rotating the first element around an axial direction from a respective holding condition of the first element in which it engages the first portion of the second element and radially holds the sector to the central body up to a respective release condition in which it is disengaged from the first portion of the second element and radially releases the sector from the central body.

Preferably, the first portion of the second element is configured to move axially and move the second portion of the second element between the holding condition and the release condition.

Preferably, moving the second portion of the second element axially away from the first element comprises axially moving the second element from a respective holding condition in which the second portion locks the first element in a respective holding condition up to a respective release condition in which the second portion is axially distanced from the first element and allows the first element to reach a respective release condition.

Preferably, bringing the first element into engagement with the first portion of the second element comprises rotating the first element around an axial direction from a respective release condition in which it is disengaged from the first portion of the second element up to a respective holding condition in which it engages the first portion of the second element and radially holds the new sector to the central body.

Preferably, moving the second portion of the second element axially towards the first element until the first element is locked comprises axially moving the second element from a respective release condition in which the second portion of the second element is axially distanced from the first element up to a respective holding condition in which the second portion of the second element locks the first element in a respective holding condition.

Preferably, the first element comprises a first portion rotatably connected to one among the central body and the sector and a second portion distal from the first portion configured to describe an arc of circle path during the passage from the release condition to the holding condition and to intercept the first portion of the second element.

Preferably, the first portion of the second element comprises a pin that extends in the axial direction and in which the second portion of the second element comprises a head arranged at an end of the pin; the size in the radial direction of the head being greater than the size in the radial direction of the pin.

Preferably, the second portion of the first element comprises a slot having an arched shape and open at a first end configured to house the pin of the second element when the first element is in the holding condition.

Preferably, the head of the second element is in contact with edges of the slot when the first and the second element are in the respective holding conditions.

Preferably, disengaging the first element from the first portion of the second element comprises arranging the first element with a slot having an arched shape and open at a first end, rotating the first element so that the first portion of the second element comes out from the slot.

Preferably, taking the first element into engagement with the first portion of the second element comprises arranging the first element with a slot having an arched shape and open at a first end, rotating the first element so that the first portion of the second element inserts in the slot.

Preferably, the rotation of the first element to make the slot come out from the first portion of the second element is carried out in the opposite angular direction to the rotation of the first element to insert the first portion of the second element inside the slot.

Preferably, bringing the second portion of the second element axially towards the first element comprises arranging the second portion of the second element with a head and bringing the head into axial abutment against the first element.

Preferably, moving the second portion of the second element axially away from the first element comprises arranging the first portion of the second element with a pin having a threaded outer surface and partially unscrewing the pin from a seat.

Preferably, the first element is movably connected to the sector and the second element is movably connected to the central body.

Preferably, each sector comprises at least one spacer that extends away from a radially inner surface of the sector; the first element of the coupling members being movably coupled on at least one spacer of each sector.

Preferably, the spacer comprises an abutment surface distal from the radially inner surface of the sector configured to contact an abutment surface of the central body.

Preferably, the spacer comprises two shoulders and a connecting surface arranged between the two shoulders; the connecting surface being configured to receive the first portion of the second element of the coupling members between the two shoulders.

Preferably, when the first element and the second element of the coupling members are in the respective holding conditions, the second portion of the second element axially presses the first element against the two shoulders of the spacer.

Preferably, taking the new sector towards the central body comprises arranging a spacer on a radially inner surface of the new sector, equipping the spacer with at least one abutment surface distal from the radially inner surface of the sector, and bringing the abutment surface of the spacer in contact with an abutment surface of the central body.

Preferably, bringing the abutment surface of the spacer in contact with an abutment surface of the central body comprises equipping the spacer with two shoulders and a connecting surface and receiving the first portion of the second element of the coupling members between the two shoulders at the connecting surface.

Preferably, moving the sector away from the central body comprises arranging a spacer on a radially inner surface of the sector, equipping the spacer of at least one abutment surface distal from the radially inner surface of the sector, and taking the abutment surface of the spacer away from an abutment surface of the central body.

Preferably, taking the abutment surface of the spacer away from an abutment surface of the central body comprises equipping the spacer with two shoulders and a connecting surface and withdrawing the first portion of the second element of the coupling members from the two shoulders at the connecting surface.

Preferably, the first element is axially arranged between the second portion of the second element and the spacer.

Preferably, the first portion of the second element comprises a threaded outer surface and screwed with an insertion depth into a seat formed in the central body; the passage from the release condition to the holding condition of the second element being carried out by increasing the insertion depth of the first portion of the second element in the seat of the central body.

Preferably, the second portion of the second element is configured to control the insertion depth of the first portion of the second element in the seat formed in the central body.

Further features and advantages of the present invention will become clearer from the following detailed description of preferred embodiments thereof, made with reference to the attached drawings.

In such drawings:
- figure 1 is a schematic perspective view of a forming drum for tyres for vehicle wheels in accordance with the present invention;
- figure 2 is a schematic side view of the drum of figure 1 with some parts removed to better highlight others;
- figure 3 is a schematic perspective view of some parts of the drum of figure 1;
- figure 4 is a schematic front view of the parts of drum of figure 3;
- figures 5 and 6 are details of figure 4 in two different operative conditions;
- figure 7 is a schematic perspective view of some parts of the drum of figure 1;
- figure 8 is a schematic front view of the parts of drum of figure 7 in a different operative condition; and
- figure 9 is a perspective view of the parts of drum represented in figure 8.

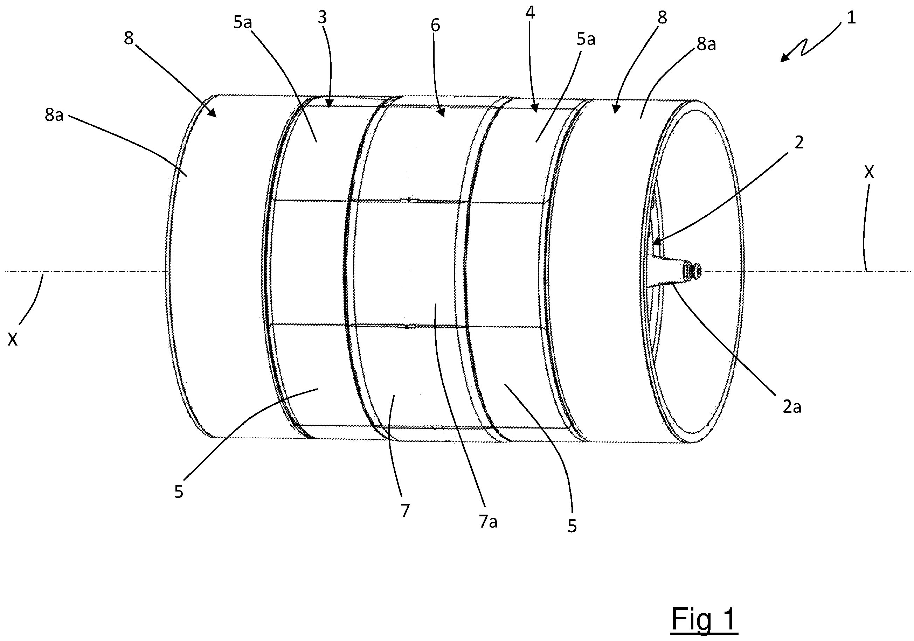

In figures 1-9, reference numeral 1 wholly indicates a forming drum for tyres for vehicle wheels in accordance with the present invention.

The drum 1 comprises a central body 2 to which deposition surfaces are radially connected. A central shaft 2a having axial extension is crossed by a geometric axis X around which the drum 1 rotates. The central body 2 is connected to the central shaft 2a to set the deposition surfaces in rotation. The deposition surfaces comprise a plurality of sectors radially arranged around the central body 2.

In the preferred embodiment of the invention, the deposition surfaces comprise two lateral deposition surfaces 3, 4, substantially cylindrical, axially opposite one another and set in rotation by the central shaft 2a.

The lateral deposition surfaces 3, 4 each comprise respective sectors 5.

The radially outer surfaces 5a of the sectors 5 are mutually arranged, at least in a deposition condition of the drum 1, so as to create a substantially continuous surface.

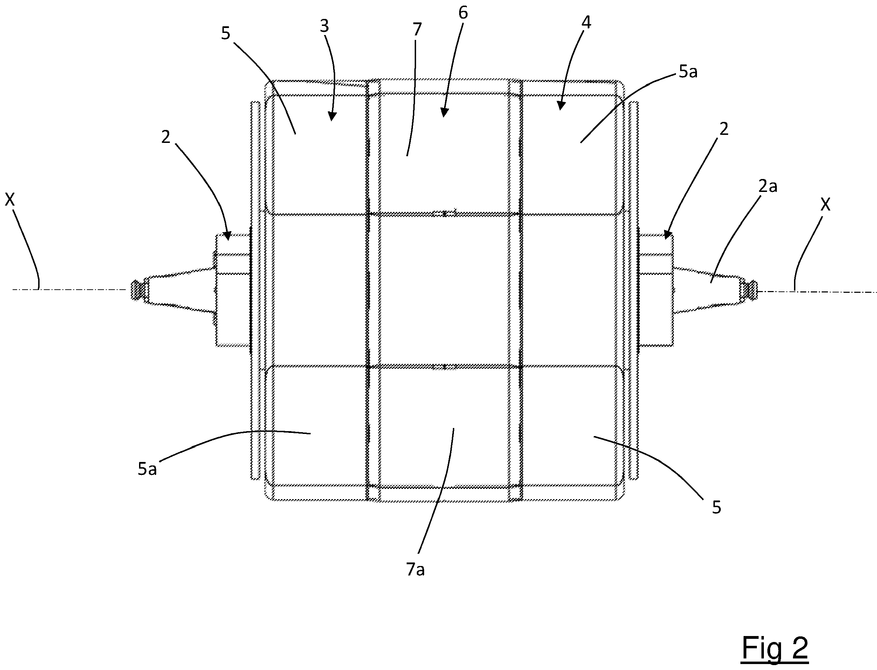

In the preferred embodiment of the invention, the lateral deposition surfaces 3, 4 are radially mobile with respect to the central shaft 2a between the deposition condition (illustrated in figures 1 and 2) and a service condition (not illustrated). In particular, in the deposition condition the sectors 5 are radially distanced from the central shaft 2a and in the service condition the sectors 5 are radially moved towards the central shaft 2a. In the service condition, the sectors 5 are not circumferentially aligned with each other but create discontinuities and do not make a continuous radially outer surface for the drum 1. The service condition can for example be carried out to remove a carcass structure, a belt structure or a tyre in formation on the forming drum 1.

In the preferred embodiment of the invention, the deposition surfaces also comprise a central deposition surface 6 arranged axially between the two lateral deposition surfaces 3, 4, as shown in figures 1 and 2. The central deposition surface 6 is also coupled with the central body 2.

The central deposition surface 6 comprises respective sectors 7. The radially outer surfaces 7a of the sectors 7 are mutually arranged, at least in the deposition condition of the drum 1, so as to create a substantially continuous surface. The central deposition surface 6 is radially mobile with respect to the central shaft 2a between the deposition condition (illustrated in figures 1 and 2) and the service condition (not illustrated). In particular, in the deposition condition the sectors 7 are radially distanced from the central shaft 2a and in the service condition the sectors 7 are moved radially towards the central shaft 2a. In the deposition condition, the central deposition surface 6 and the two lateral deposition surfaces 3, 4 are continuous and substantially aligned with each other.

The sectors 7 of the central deposition surface 6 are axially connected to the sectors 5 of the lateral deposition surfaces 3, 4, in a sliding manner. The sectors 7 of the central deposition surface 6 are rigidly radially connected to the sectors 5 of the lateral deposition surfaces 3, 4, so that a radial movement of the sectors 7 of the central deposition surface 6 causes a same radial movement of the sectors 5 of the lateral deposition surfaces 3, 4 and so that a radial movement of the sectors 5 of the lateral deposition surfaces 3, 4 causes a same radial movement of the sectors 7 of the central deposition surface 6. The sectors 7 of the central deposition surface 6 are rotatably connected to the sectors 5 of the lateral deposition surfaces 3, 4, so as a rotation of the sectors 7 of the central deposition surface 6 around the geometric axis X causes a same rotation around the geometric axis X of the sectors 5 of the lateral deposition surfaces 3, 4 and so that a rotation of the sectors 5 of the lateral deposition surfaces 3, 4 around the geometric axis X causes a same rotation around the geometric axis X of the sectors 7 of the central deposition surface 6.

Auxiliary support elements 8 are provided in axially outer position with respect to the two lateral deposition surfaces 3, 4, as shown in figure 1. The auxiliary support elements 8 are preferably annular and comprise a radially outer surface 8a substantially aligned with the lateral deposition surfaces 3, 4, when in the deposition condition. Each auxiliary support element 8 is axially constrained, in a removable manner, to a respective lateral deposition surface 3, 4.

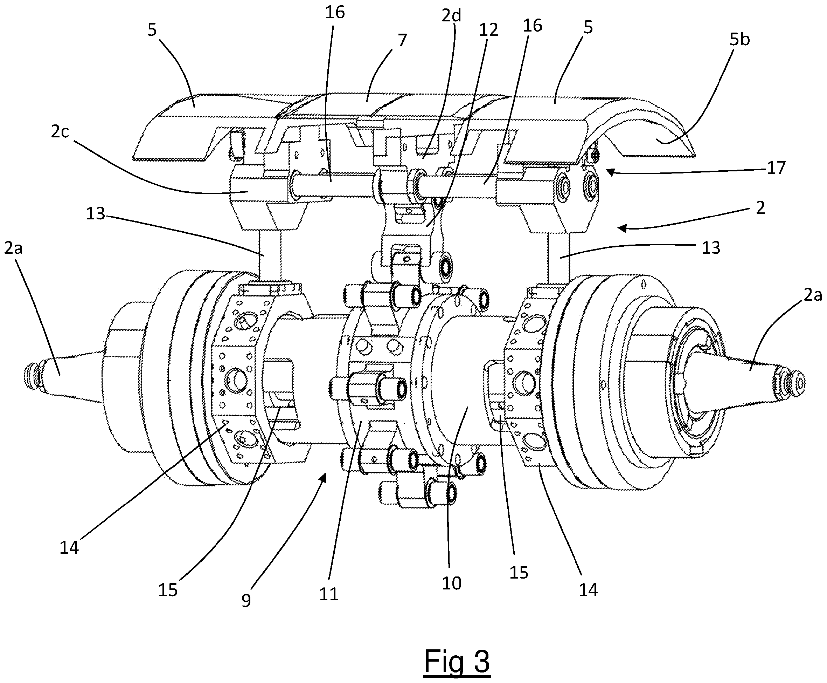

In order to allow the lateral deposition surfaces 3, 4 and the central deposition surface 6 to radially contract and expand, the central body 2 comprises an expansion linkage 9 (illustrated only partially in figure 3) configured to move the central sectors 7 in the radial direction. The radial movement of the sectors 7 of the central deposition surface 6 is transmitted to the sectors 5 of the lateral deposition surfaces 3, 4.

In the preferred embodiment of the invention, the expansion linkage 9 comprises a maneuvering shaft 10 (illustrated in figure 3) rotatably fitted onto the central shaft 2a. The maneuvering shaft 10 is fixedly connected to a maneuvering ring 11 that is rotatable with respect to the central shaft 2a and axially positioned at the sectors 7 of the central deposition surface 6. The sectors 7 are connected to the maneuvering ring 11 through a connecting rod 12 hinged at one end to the maneuvering ring 11 and, at the other end, to a support body 2d (of the central body 2) for the sector 7 of the central deposition surface 6. Each sector 5 of the lateral deposition surfaces 3, 4 is connected to a first end of a telescopic support 13 through a support body 2c of the central body 2. The telescopic support 13 is connected at a second end to a crown 14 slidably fitted onto the maneuvering shaft 10 (see figure 3). By rotating the maneuvering shaft 10 with respect to the central shaft 2a in a first angular direction from the service condition, a radial expansion of the sectors 7 of the central deposition surface 6 is carried out until the deposition condition is reached. The radial movement of the sectors 7 of the central deposition surface 6 also pulls the sectors 5 of the lateral deposition surfaces 3, 4, in the deposition condition. By rotating the maneuvering shaft 10 with respect to the central shaft 2a in a second angular direction from the deposition condition, a radial contraction of the sectors 7 of the central deposition surface 6 is carried out until the service condition is reached. The radial movement of the sectors 7 of the central deposition surface 6 also pulls the sectors 5 of the lateral deposition surfaces 3, 4 in the service condition.

The maneuvering shaft 10 comprises a plurality of openings 15 each of which is crossed by brackets (not illustrated) that connect the crown 14 to the central shaft 2a. The openings 15 allow the maneuvering shaft 10 to rotate by the angular amount necessary to contract and expand the sectors without sett the central shaft 2a in rotation.

The rotation of the drum 1 around the geometric axis X is obtained by rotating the central shaft 2a that sets the brackets and with them the crown 14 in rotation. The rotation of the crown 14 determines the rotation of the telescopic supports 13 of the sectors 5 of the lateral deposition surfaces 3, 4 and thus of the support bodies 2c of the sectors 5 which set the support bodies 2d of the sectors 7 of the central deposition surface 6 in rotation. The rotation of the support bodies 2d of the sectors 7 of the central deposition surface 6 sets the maneuvering ring 11 in rotation, which sets the maneuvering shaft 10 in rotation. In this way, the central shaft 2a and the maneuvering shaft 10 rotate as a unit with each other and the lateral and central deposition surfaces 3, 4; 6, during the rotation of the drum 1, remain in the radial position taken up.

The central body 2 also comprises an adjustment linkage (not illustrated) configured to axially move the two lateral deposition surfaces 3, 4, axially towards and away from one another and define different axial sizes for the forming drum 1.

As an example, the adjustment linkage can comprise an adjustment shaft coaxial to the central shaft 2a equipped with threaded portions that engage respective internally threaded sleds. The brackets connected to the crown 14 are mounted on the sleds.

By rotating the adjustment shaft with respect to the central shaft 2a, the sleds translate axially towards and away from each other as a function of the direction of mutual rotation between central shaft 2a and adjustment shaft, moved by the threaded portions of the adjustment shaft. The two sleds axially move the crowns 14 to which the sectors 5 of the lateral deposition surfaces 3, 4 are constrained, through the telescopic supports 13. The sectors 5 of the two lateral deposition surfaces 3, 4 can move towards or away from one another since they are mutually axially connected by rods 16 (figure 3) of the central body 2. The rods 16 are oriented in the axial direction and can be telescopic (to shorten and lengthen) or can be coupled with the sectors 5 so that the sectors 5 are axially translatable along the rods 16. The rods 16 are arranged between the support bodies 2c of the sectors 5 of the lateral deposition surfaces 3, 4 and the support bodies 2d of the sectors 7 of the central deposition surface 6 to mutually rotationally constrain the support bodies 2c, 2d.

Between the sectors 5, the sectors 7 and the central body 2, coupling members 17 configured to removably hold the sectors 5 to the central body 2 are active.

The coupling members 17 allow the removal and the insertion of the sectors 5 and of the sectors 7 on the central body 2.

In the rest of the present description reference will be made to the coupling members 17 in relation to a sector 5 of the lateral deposition surfaces 3, 4, however it should be understood that what is described also applies in relation to all of the other sectors 5 and to the sectors 7 of the central deposition surface 6, except when expressly indicated otherwise.

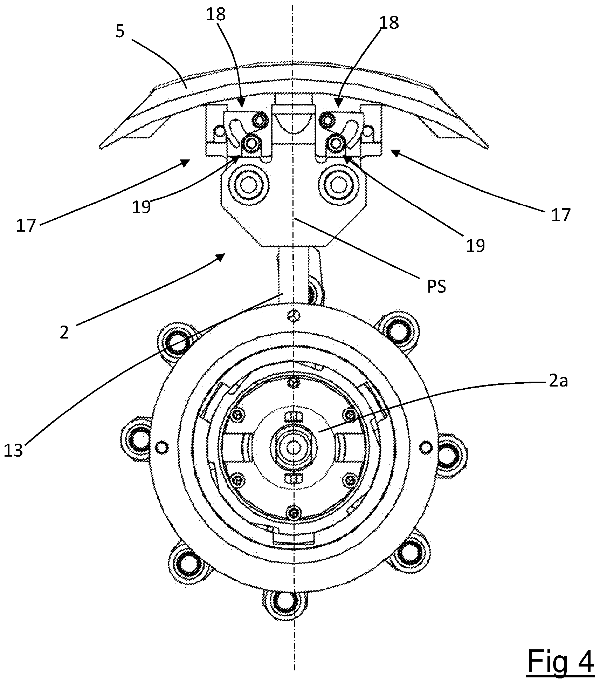

In the preferred embodiment of the invention, two coupling members 17 act between each sector 5 and the central body 2 (figure 4).

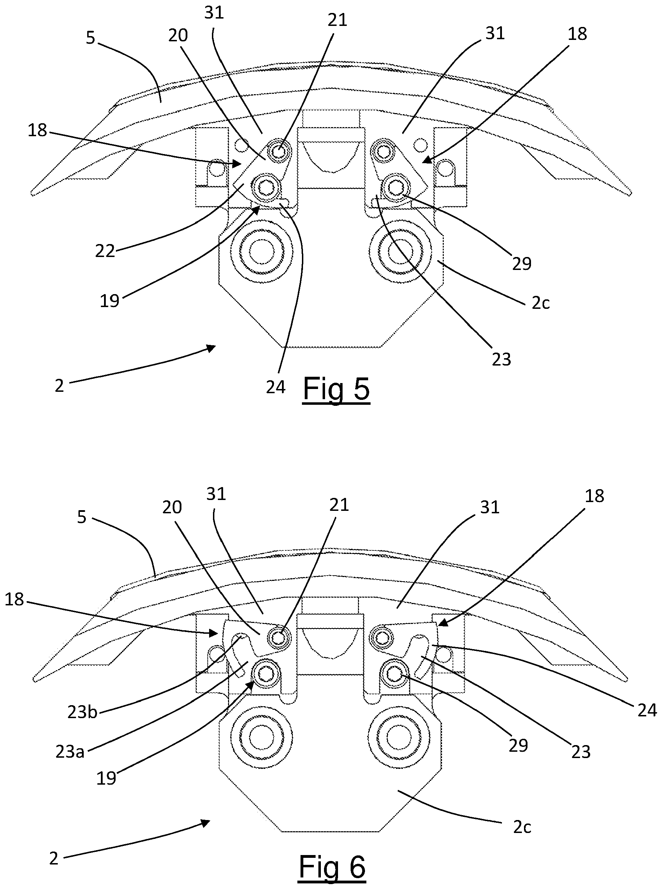

Each coupling member 17 comprises a first element 18 configured to engage a second element 19 so that the mutual engagement between first element 18 and the second element 19 defines a holding condition for the sector 5 in which the sector 5 is constrained in the radial direction to the central body 2, as illustrated in figure 5. When the first element 18 is disengaged from the second element 19, as illustrated in figure 6, a release condition is defined for the sector 5 in which the sector 5 can be removed from the central body 2.

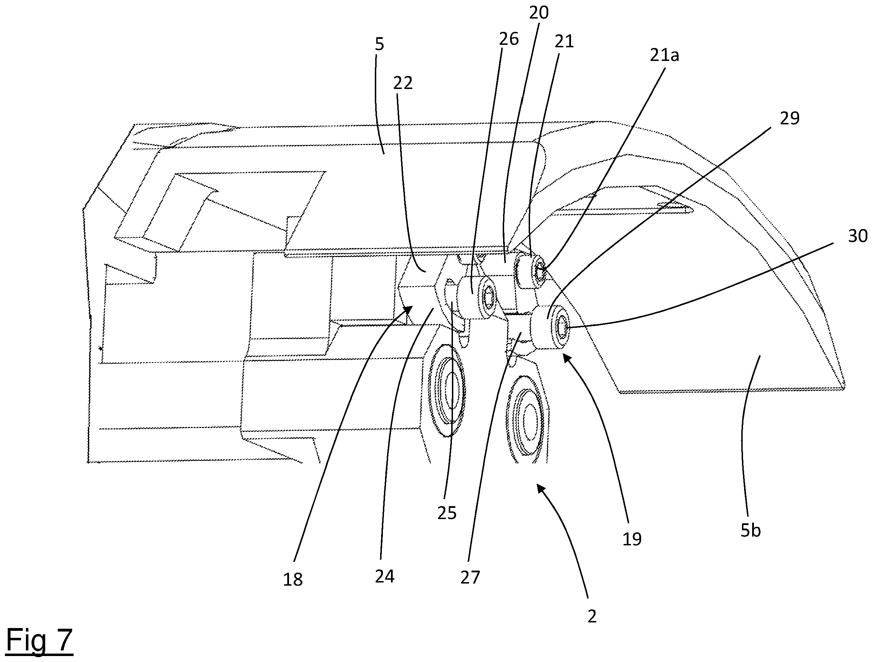

The first element 18 comprises a first portion 20 rotatably constrained to the sector 5. The first portion 20 comprises a connection hinge 21 with the sector 5 so as to allow the first portion 20 to rotate around an axial direction. The hinge 21 is for example made from a pin 21a fixedly connected to the sector 5 that engages a hole in the first portion 20, as schematically illustrated in figure 7.

The first element 18 also comprises a second portion 22 distal from the first portion 20 and in one piece with the first portion 20 that carries out an arc of circle path along a radial plane when the first portion 20 rotates around the hinge 21. The second portion 22 of the first element 18 comprises a slot 23 having an arched extension. The slot 23 is open at a first end 23a and closed by a wall of the second portion 22 at a second end 23b opposite to the first end 23a (figure 6). The slot 23 is delimited, in the radial direction, by an appendage 24 of the second portion 22.

The second element 19 is movably connected to the central body 2. Each second element 19 active on a sector 5 of the lateral deposition surfaces 3, 4 is movably connected to the central body 2 at a radially outer portion thereof, in particular to the support body 2c connected in radially outer portion to an end of a respective telescopic support 13. Each second element 19 active on a sector 7 of the central deposition surface 6 is movably connected to the central body 2 at a radially outer portion thereof, in particular to the support body 2d connected in radially outer position to a respective connecting rod 12.

The second element 19 of each coupling member 17 comprises a first portion 25 configured to hold the first element 18 in the radial direction and a second portion 26 configured to hold the first element 18 in the axial direction.

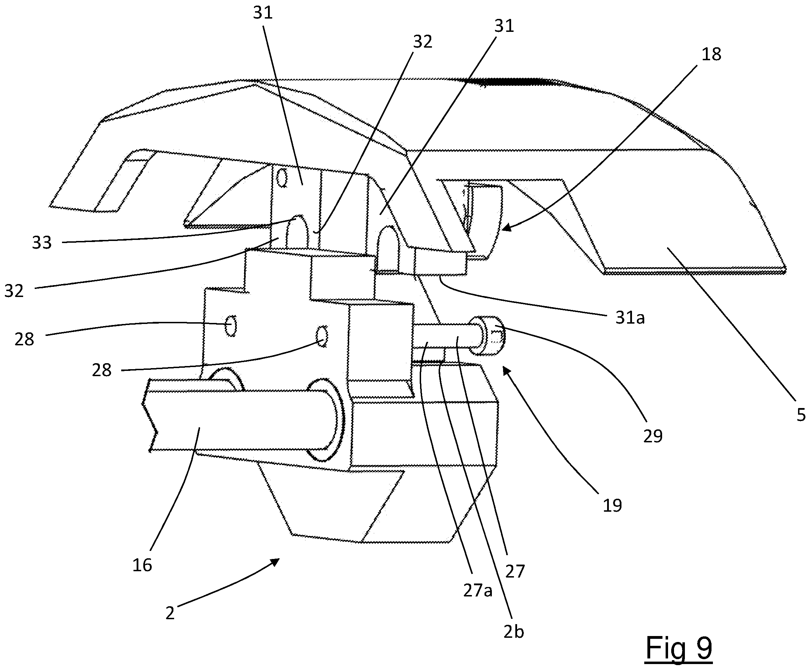

The first portion 25 has a substantially axial extension and comprises a pin 27 inserted in a seat 28 formed on the central body 2 (figure 9). The pin 27 movably engages the seat 28 so as to be able to slide axially in the seat 28. For this purpose, the pin 27 comprises a threaded outer surface 27a and the seat 28 comprises an internal threading configured to couple with the threaded outer surface 27a of the pin 27. By screwing the pin 27 into the seat 28, the pin 27 increases the degree of penetration thereof inside the seat 28. By unscrewing the pin 27 from the seat 28, the pin 27 decreases the degree of penetration thereof inside the seat 28. The diameter of the pin 27 and the size of the slot 23 of the second portion 22 of the first element 18 are selected so that the pin 27 can be received inside the slot 23.

The second portion 26 of the second element 19 comprises a head 29. The head 29 is arranged at an end of the pin 27 and in particular at the end of the pin 27 opposite the end that engages the seat 28 in the central body 2, as illustrated in figure 7. The head 29 is preferably in one piece with the pin 27 and has a greater diameter than the diameter of the pin 27. The diameter of the head 29 is selected so as to not allow the head 29 to be received inside the slot 23 of the first element 18. In the preferred embodiment of the invention, the head 29 comprises a maneuvering seat 30 configured to be engaged by a maneuvering tool (for example an Allen key) and allow the axial movement of the pin 27 inside the seat 28.

As better illustrated in figure 9, the sector 5 comprises a spacer 31 for each coupling member 17. Each spacer 31 extends in the radial direction towards the central body 2 from a radially inner surface 5b of the sector 5. Each spacer 31 comprises two shoulders 32 distanced from one another. A substantially arched connecting surface 33 is provided between the two shoulders 32. The two shoulders 32 extend in the radial direction from the connecting surface 33. The distance that separates the two shoulders 32 is greater than the diameter of the pin 27, so that the pin 27 can be housed between the two shoulders 32 at the connecting surface 33. Each spacer 31 comprises at least one abutment surface 31a intended to contact an abutment surface 2b provided on the central body 2. Each abutment surface 31a of the spacer 31 is formed at an end of a shoulder 32 on the opposite side with respect to the radially inner surface 5b of the sector 5.

The first element 18 of the coupling members 17 is hinged on the spacer 31 in a radially outer position with respect to the abutment surface 33. In other words, the hinge point between the first element 18 and the spacer is radially interposed between the radially inner surface 5b of the sector 5 and the abutment surface 33.

The size in the radial direction of the spacer 31 is selected as a function of the radial size that the forming drum 1 must have. The circumferential size of the radially outer surface 5a of the sector 5 is also selected as a function of the radial size that the forming drum 1 must have. In particular, the greater the radial size of the spacer 31, the greater than circumferential size of the radially outer surface 5a of the sector 5. The smaller the radial size of the spacer 31, the smaller the circumferential size of the radially outer surface 5a of the sector 5.

As stated, for every sector 5 two coupling members 17 are provided. The coupling members 17 are arranged symmetrically with respect to a radial plane passing through the sector 5. In particular, the sector 5 is symmetrical with respect to a radial plane of symmetry PS and the coupling members 17 are arranged symmetrically with respect to the same radial plane of symmetry PS (figure 4).

In order to change the radial size of the lateral and central deposition surfaces 3, 4; 6 of the forming drum 1 what is described hereinafter is carried out.

When the forming drum is in use, the sectors 5, 7 are constrained to the central body 2 with the first element 18 in a holding condition, in which it engages the first portion 25 of the second element 19 and radially holds the sector 5, 7 to the central body 2, and the second element 19 is in a holding condition, in which the second portion 26 of the second element 19 locks the first element 18 in the respective holding condition preventing any axial movement of the sector 5 with respect to the central body 2. This configuration is illustrated in figure 5.

In this condition, the second portion 22 of the first element 18 is rotated so that the slot 23 receives the pin 27 of the second element 19. The appendage 24 of the second portion 22 of the first element 18 prevents the sector 5, 7 from being able to move in the radially outer direction with respect to the central body 2. The pin 27 is inserted in the seat 28 with a degree of insertion such that the head 29 axially contacts the edges of the slot 23 and preferably lightly presses on the edges of the slot 23 preventing the rotation of the first element 18.

Starting from this configuration, the second portion 26 of the second element 19 is taken into a release condition in which the second portion 26 of the second element 19 is axially distanced from the first element 18. Such an operation is carried out by partially extracting the pin 27 from the seat 28. In particular, an operator acts with a maneuvering tool on the maneuvering seat 30 of the head 29 of the second element 19 and partially unscrews the pin 27 from the seat 28.

The release condition of the second portion 26 of the second element 19 determines the removal of the axial constraint for the first element 18 and thus for the sector 5, 7. This makes an axial clearance between the sector 5, 7 and the central body 2. This condition is shown in figure 7.

The first element 18 is thus rotated to reach a release condition in which the pin 27 is extracted from the slot 23. The appendage 24 of the second portion 22 of the first element 18 is no longer in contact with the second element 19 and is no longer capable of holding the sector 5, 7 radially on the central body 2. This condition is illustrated in figure 6.

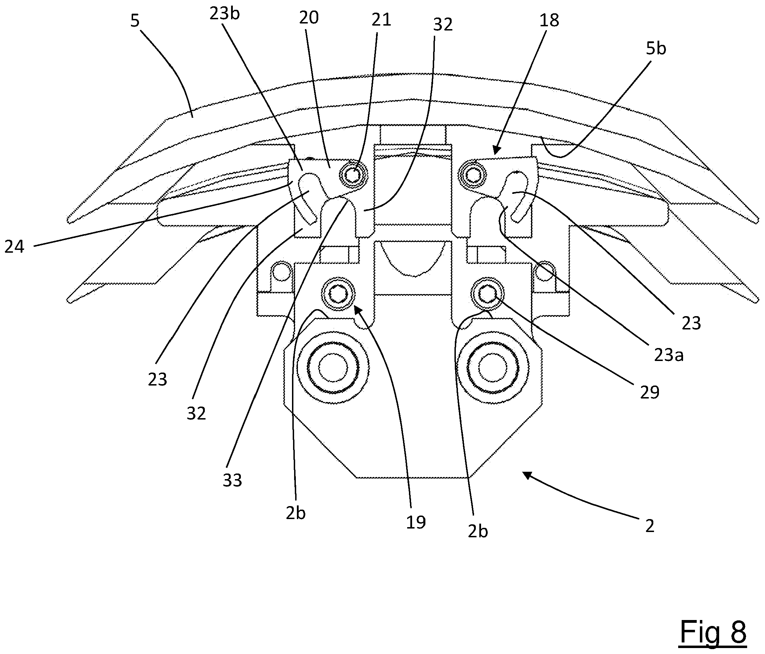

At this point, an operator can distance the sector 5, 7 from the central body 2 (figures 8 and 9).

In particular, in order to distance the sectors 5 of the lateral deposition surfaces 3, 4, each sector 5 is axially distanced from the central body 2.

The distancing of the sector 5 from the central body 2 is, at least in a first step, guided in the axial direction by the shoulders 32 of the spacers 31 between which the second element 19 is arranged.

In order to distance the sectors 7 of the central deposition surface 6, each sector 7 is radially distanced from the central body 2.

The distancing of the sector 7 from the central body 2 is, at least in a first step, guided in the radial direction by the shoulders 32 of the spacers 31 between which the second element 19 is arranged.

Having removed all of the sectors 5, 7, new sectors 5, 7, having a circumferential size of the radially outer surface 5a different from the circumferential size of the radially outer surface 5a of the sectors 5, 7 removed and equipped with spacers 31 of different size from the size of the spacers 31 of the removed sectors 5, 7 are inserted on the central body.

Each new sector 7 of the central deposition surface 6 is moved radially towards the central body 2 (figures 8, 9) so as to at least approximately align the spacers 31 with the second elements 19.

Each new sector 5 of the lateral deposition surfaces 3, 4 is moved axially towards the central body 2 so as to at least approximately align the spacers 31 with the second elements 19.

In both cases, the new sector 5, 7 is slotted onto the central body 2 so that the second elements 19 are arranged between the shoulders 32 of the spacers 31 and so that the abutment surfaces 31a of the spacers 31 go into abutment on the abutment surface 2b of the central body 2. In this condition, illustrated in figure 6, there is an axial and radial space between the new sector 5, 7 and the central body 2 since both the second portions 26 of the second elements 19 and the first elements 18 are in the release condition.

The first elements 18 are rotated so that the pins 27 of the second elements 19 insert in the slots 23 of the first elements 18. After such a rotation the appendages 24 of the second portions 22 of the first elements 18 are positioned radially below the pins 27 and prevent radial movements of the new sector 5, 7 with respect to the central body 2. The first elements 18 thus pass from the release condition to the holding condition, whereas the second elements 19 remain in the release condition. This condition is illustrated in figure 7.

At this point, the second elements 19 are taken into the holding condition. In particular, the second portion 26 of the second element 19 is moved axially closer to the first element 18. Such an operation is carried out by increasing the degree of insertion of the pin 27 in the seat 28. In particular, an operator acts with a maneuvering tool on the maneuvering seat 30 of the head 29 of the second element 19 and screws the pin 27 into the seat 28. The pin 27 is inserted into the seat 28 with a degree of insertion such that the head 29 axially contacts the edges of the slot 23 and preferably lightly presses on the edges of the slot 23 preventing the rotation of the first element 18.

The holding condition of the second portion 26 of the second element 19 determines an axial constraint for the first element 18 and thus for the sector 5, 7, and completes the replacement of the sector 5, 7. This condition is shown in figure 5.

The replacement operation is completed by inserting all of the new sectors 5, 7 on the central body 2.

The present invention has been described with reference to some preferred embodiments. Different modifications can be brought to the embodiments described above, still remaining within the scope of protection of the invention, defined by the following claims.

## Claims

1. Forming drum (1) for producing tyres for vehicle wheels comprising:
a central shaft (2a) concentric to a geometric rotation axis (X) of the forming drum (1);
a plurality of sectors (5, 7) circumferentially arranged around the central shaft (2a) to define at least one deposition surface (3, 4, 6);
a central body (2) connected to the central shaft (2a) and to the plurality of sectors (5, 7) to set the sectors (5, 7) in rotation around the central shaft (2a);
coupling members (17) operating between each sector (5, 7) of the plurality of sectors (5, 7) and the central body (2) configured to hold and release each sector (5, 7) from the central body (2); **characterized in that**
each coupling member (17) comprises a first element (18) movably connected to one among the central body (2) and the sector (5, 7) and a second element (19) movably connected to the other among the central body (2) and the sector (5, 7) and comprising a first portion (25) and a second portion (26);
wherein the first element (18) is configured to move between a holding condition in which it engages the first portion (25) of the second element (19) and radially holds the sector (5, 7) to the central body (2) and a release condition in which it is disengaged from the first portion (25) of the second element (19) and radially releases the sector (5, 7) from the central body (2);
and the second element (19) is configured to move between a holding condition in which the second portion (26) locks the first element (18) in the respective holding condition and a release condition in which the second portion (26) is axially distanced from the first element (18) and allows the first element (18) to reach the respective release condition.

2. Forming drum (1) according to claim 1, wherein the first element (18) moves on a radial plane between the holding condition and the release condition and between the release condition and the holding condition to engage and disengage the first portion (25) of the second element (19); the first element (18) carrying out a rotation around an axial direction to pass from the holding condition to the release condition and to pass from the release condition to the holding condition.

3. Forming drum (1) according to any one of the previous claims, wherein the first portion (25) of the second element (19) is configured to move axially and to move the second portion (26) of the second element (19) between the holding condition and the release condition.

4. Forming drum (1) according to any one of the previous claims, wherein the first element (18) comprises a first portion (20) rotatably connected to one among the central body (2) and the sector (5, 7) and a second portion (22) distal from the first portion (20) configured to describe an arc of circle path during the passage from the release condition to the holding condition and to intercept the first portion (25) of the second element (19); the first portion (25) of the second element (19) comprising a pin (27) that extends in the axial direction and the second portion (26) of the second element (19) comprising a head (29) arranged at an end of the pin (27); the size in the radial direction of the head (29) being greater than the size in the radial direction of the pin (27).

5. Forming drum (1) according to claim 4, wherein the second portion (22) of the first element (18) comprises a slot (23) having an arched shape and open at a first end (23a) configured to house the pin (27) of the second element (19) when the first element (18) is in the holding condition; the head (29) of the second element (19) being in contact with edges of the slot (23) when the first element (18) and the second element (19) are in the respective holding conditions.

6. Forming drum (1) according to any one of the previous claims, wherein the first element (18) is movably connected to the sector (5, 7) and wherein the second element (19) is movably connected to the central body (2).

7. Forming drum (1) according to any one of the previous claims, wherein each sector (5, 7) comprises at least one spacer (31) that extends away from a radially inner surface (5a) of the sector (5, 7); the first element (18) of the coupling members (17) being movably coupled on at least one spacer (31) of each sector (5, 7); the spacer (31) comprising two shoulders (32) and a connecting surface (33) arranged between the two shoulders (32); the connecting surface (33) being configured to receive the first portion (25) of the second element (19) of the coupling members (17) between the two shoulders (32); wherein, when the first element (18) and the second element (19) of the coupling members (17) are in the respective holding conditions, the second portion (26) of the second element (19) axially presses the first element (18) against the two shoulders (32) of the spacer (31).

8. Forming drum (1) according to any one of the previous claims, wherein the first portion (25) of the second element (19) comprises a threaded outer surface (27a) and screwed with an insertion depth in a seat (28) formed in the central body (2); the passage from the release condition to the holding condition of the second element (19) being carried out by increasing the insertion depth of the first portion (25) of the second element (19) in the seat (28) of the central body (2); the second portion (26) of the second element (19) being configured to control the insertion depth of the first portion (25) of the second element (19) in the seat (28) formed in the central body (2).

9. Method for changing the geometry of a forming drum (1) for producing tyres for vehicle wheels comprising:
arranging a deposition surface (3, 4, 6) through sectors (5, 7) circumferentially arranged around a central shaft (2a) and removably coupled with a central body (2);
arranging coupling members (17) for each sector (5, 7) comprising a first element (18) movably connected to one among the central body (2) and the sector (5, 7) and a second element (19) movably connected to the other among the central body (2) and the sector (5, 7) and comprising a first portion (25) and a second portion (26);
changing deposition surface (3, 4, 6) by removing the sectors (5, 7) from the central body (2) and inserting new sectors (5, 7) on the central body (2);
wherein removing the sectors (5, 7) from the central body (2) comprises for every sector (5, 7):
moving the second portion (26) of the second element (19) axially away from the first element (18), disengaging the first element (18) from the first portion (25) of the second element (19) and taking the sector (5, 7) away from the central body (2);
and wherein inserting new sectors (5, 7) on the central body (2) comprises for every new sector (5, 7):
bringing the new sector (5, 7) towards the central body (2), moving the first element (18) to take it into engagement with the first portion (25) of the second element (19), bringing the second portion (26) of the second element (19) axially towards the first element (18) until the first element (18) is locked.

10. Method according to claim 9, wherein disengaging the first element (18) from the first portion (25) of the second element (19) comprises rotating the first element (18) around an axial direction from a respective holding condition of the first element (18) in which it engages the first portion (25) of the second element (19) and radially holds the sector (5, 7) to the central body (2) up to a respective release condition in which it is disengaged from the first portion (25) of the second element (19) and radially releases the sector (5, 7) from the central body (2) and wherein taking the first element (18) into engagement with the first portion (25) of the second element (19) comprises rotating the first element (18) around an axial direction from a respective release condition in which it is disengaged from the first portion (25) of the second element (19) up to a respective holding condition in which it engages the first portion (25) of the second element (19) and radially holds the new sector (5, 7) to the central body (2).

11. Method according to any one of claims 9 to 10, wherein moving the second portion (26) of the second element (19) axially away from the first element (18) comprises axially moving the second element (19) from a respective holding condition in which the second portion (26) locks the first element (18) in a respective holding condition up to a respective release condition in which the second portion (26) is brought axially away from the first element (18) and allows the first element (18) to reach a respective release condition and wherein bringing the second portion (26) of the second element (19) axially towards the first element (18) until the first element (18) is locked comprises axially moving the second element (19) from a respective release condition in which the second portion (26) of the second element (19) is axially distanced from the first element (18) up to a respective holding condition in which the second portion (26) of the second element (19) locks the first element (18) in a respective holding condition.

12. Method according to any one of claims 9 to 11, wherein bringing the new sector (5, 7) towards the central body (2) comprises arranging a spacer (31) on a radially inner surface (5a) of the new sector, equipping the spacer (31) with at least one abutment surface (31a), distal from the radially inner surface of the sector, and taking the abutment surface (31a) of the spacer (31) in contact with an abutment surface (2b) of the central body (2) and wherein taking the sector (5, 7) away from the central body (2) comprises arranging a spacer (31) on a radially inner surface (5a) of the sector, equipping the spacer (31) with at least one abutment surface (31a), distal from the radially inner surface of the sector (5, 7), and taking the abutment surface (31a) of the spacer (31) away from an abutment surface (2b) of the central body (2).

13. Method according to any one of claims 9 to 12, wherein disengaging the first element (18) from the first portion (25) of the second element (19) comprises arranging the first element (18) with a slot (23) of arched shape and open at a first end (23a), rotating the first element (18) so that the first portion (25) of the second element (19) comes out from the slot (23) and wherein taking the first element (18) into engagement with the first portion (25) of the second element (19) comprises arranging the first element (18) with a slot (23) of arched shape and open at a first end (23a), rotating the first element (18) so that the first portion (25) of the second element (19) inserts in the slot (23).

14. Method according to claim 13, wherein the rotation of the first element (18) to make the slot (23) come out from the first portion (25) of the second element (19) is carried out in the opposite angular direction to the rotation of the first element (18) to insert the first portion (25) of the second element (19) inside the slot (23).

15. Method according to any one of claims 9 to 14, wherein bringing the second portion (26) of the second element (19) axially towards the first element (18) comprises arranging the second portion (26) of the second element (19) with a head (29) and taking the head (29) into axial abutment against the first element (18) and wherein moving the second portion (26) of the second element (19) axially away from the first element (18) comprises arranging the first portion (25) of the second element (19) with a pin (27) having a threaded outer surface (27a) and partially unscrewing the pin (27) from a seat (28).

## Patentansprüche

1. Formtrommel (1) zur Herstellung von Reifen für Fahrzeugräder, umfassend:
eine zentrale Welle (2a), die konzentrisch zu einer geometrischen Drehachse (X) der Formtrommel (1) ist,
eine Vielzahl von Sektoren (5, 7), die in Umfangsrichtung um die zentrale Welle (2a) angeordnet sind, um mindestens eine Ablagefläche (3, 4, 6) zu definieren;
einen zentralen Körper (2), der mit der zentralen Welle (2a) und der Vielzahl von Sektoren (5, 7) verbunden ist, um die Sektoren (5, 7) in Drehung um die zentrale Welle (2a) zu versetzen;
Kopplungselemente (17), die zwischen jedem Sektor (5, 7) der Vielzahl von Sektoren (5, 7) und dem Zentralkörper (2) wirken und dafür konfiguriert sind, jeden Sektor (5, 7) vom Zentralkörper (2) zu halten und zu lösen; **dadurch gekennzeichnet, dass**
jedes Kopplungselement (17) ein erstes Element (18), das beweglich mit dem Zentralkörper (2) oder dem Sektor (5, 7) verbunden ist, und ein zweites Element (19) umfasst, das beweglich mit dem anderen Element, dem Zentralkörper (2) oder dem Sektor (5, 7), verbunden ist und einen ersten Abschnitt (25) und einen zweiten Abschnitt (26) umfasst,
wobei das erste Element (18) dafür konfiguriert ist, sich zwischen einem Haltezustand, in dem es mit dem ersten Abschnitt (25) des zweiten Elements (19) in Eingriff kommt und den Sektor (5, 7) radial an dem zentralen Körper (2) hält, und einem Freigabezustand zu bewegen, in dem es von dem ersten Abschnitt (25) des zweiten Elements (19) gelöst ist und den Sektor (5, 7) radial von dem zentralen Körper (2) löst;
und das zweite Element (19) dafür konfiguriert ist, sich zwischen einem Haltezustand, in dem der zweite Abschnitt (26) das erste Element (18) in dem jeweiligen Haltezustand arretiert, und einem Freigabezustand zu bewegen, in dem der zweite Abschnitt (26) axial von dem ersten Element (18) beabstandet ist und dem ersten Element (18) ermöglicht, den jeweiligen Freigabezustand zu erreichen.

2. Formtrommel (1) nach Anspruch 1, wobei sich das erste Element (18) auf einer radialen Ebene zwischen dem Haltezustand und dem Freigabezustand und zwischen dem Freigabezustand und dem Haltezustand bewegt, um mit dem ersten Abschnitt (25) des zweiten Elements (19) in Eingriff zu kommen und diesen freizugeben; wobei das erste Element (18) eine Drehung um eine axiale Richtung ausführt, um vom Haltezustand in den Freigabezustand und vom Freigabezustand in den Haltezustand zu gelangen.

3. Formtrommel (1) nach einem der vorhergehenden Ansprüche, wobei der erste Abschnitt (25) des zweiten Elements (19) dafür konfiguriert ist, sich axial zu bewegen und den zweiten Abschnitt (26) des zweiten Elements (19) zwischen dem Haltezustand und dem Freigabezustand zu bewegen.

4. Formtrommel (1) nach einem der vorhergehenden Ansprüche, wobei das erste Element (18) einen ersten Abschnitt (20) umfasst, der drehbar mit dem Zentralkörper (2) oder dem Sektor (5, 7) verbunden ist, und einen zweiten Abschnitt (22), der vom ersten Abschnitt (20) entfernt ist und dafür konfiguriert ist, einen kreisbogenförmigen Pfad während des Übergangs vom Freigabezustand zum Haltezustand zu beschreiben und den ersten Abschnitt (25) des zweiten Elements (19) abzufangen; wobei der erste Abschnitt (25) des zweiten Elements (19) einen Stift (27) umfasst, der sich in der axialen Richtung erstreckt, und der zweite Abschnitt (26) des zweiten Elements (19) einen Kopf (29) umfasst, der an einem Ende des Stifts (27) angeordnet ist, wobei die Größe in der radialen Richtung des Kopfes (29) größer ist als die Größe in der radialen Richtung des Stifts (27).

5. Formtrommel (1) nach Anspruch 4, wobei der zweite Abschnitt (22) des ersten Elements (18) einen Schlitz (23) umfasst, der eine gewölbte Form aufweist und an einem ersten Ende (23a) offen ist, das dafür konfiguriert ist, den Stift (27) des zweiten Elements (19) aufzunehmen, wenn sich das erste Element (18) in dem Haltezustand befindet; wobei der Kopf (29) des zweiten Elements (19) in Kontakt mit den Kanten des Schlitzes (23) ist, wenn das erste Element (18) und das zweite Element (19) in den jeweiligen Haltezuständen sind.

6. Formtrommel (1) nach einem der vorhergehenden Ansprüche, wobei das erste Element (18) beweglich mit dem Sektor (5, 7) verbunden ist und wobei das zweite Element (19) beweglich mit dem Zentralkörper (2) verbunden ist.

7. Formtrommel (1) nach einem der vorhergehenden Ansprüche, wobei jeder Sektor (5, 7) mindestens einen Abstandshalter (31) umfasst, der sich von einer radial inneren Oberfläche (5a) des Sektors (5, 7) weg erstreckt, wobei das erste Element (18) der Kopplungselemente (17) beweglich an mindestens einen Abstandshalter (31) jedes Sektors (5, 7) gekoppelt ist, wobei der Abstandshalter (31) zwei Schultern (32) und eine Verbindungsfläche (33) umfasst, die zwischen den beiden Schultern (32) angeordnet ist, wobei die Verbindungsfläche (33) dafür konfiguriert ist, den ersten Abschnitt (25) des zweiten Elements (19) der Kopplungselemente (17) zwischen den beiden Schultern (32) aufzunehmen, wobei, wenn sich das erste Element (18) und das zweite Element (19) der Kopplungselemente (17) in den jeweiligen Haltezuständen befinden, der zweite Abschnitt (26) des zweiten Elements (19) das erste Element (18) axial gegen die beiden Schultern (32) des Abstandhalters (31) drückt.

8. Formtrommel (1) nach einem der vorhergehenden Ansprüche, wobei der erste Abschnitt (25) des zweiten Elements (19) eine mit einem Gewinde versehene Außenfläche (27a) umfasst und mit einer Einstecktiefe in einen im Zentralkörper (2) gebildeten Sitz (28) geschraubt ist, wobei der Übergang vom Freigabezustand in den Haltezustand des zweiten Elements (19) durch Vergrößerung der Einstecktiefe des ersten Abschnitts (25) des zweiten Elements (19) in den Sitz (28) des Zentralkörpers (2) durchgeführt wird, wobei der zweite Abschnitt (26) des zweiten Elements (19) dafür konfiguriert ist, die Einstecktiefe des ersten Abschnitts (25) des zweiten Elements (19) in den im Zentralkörper (2) gebildeten Sitz (28) zu steuern.

9. Verfahren zur Änderung der Geometrie einer Formtrommel (1) zur Herstellung von Reifen für Fahrzeugräder, umfassend:
Anordnen einer Ablagefläche (3, 4, 6) durch Sektoren (5, 7), die in Umfangsrichtung um eine zentrale Welle (2a) angeordnet und abnehmbar mit einem zentralen Körper (2) verbunden sind,
Anordnen von Kopplungselementen (17) für jeden Sektor (5, 7), der ein erstes Element (18) umfasst, das beweglich mit dem Zentralkörper (2) oder dem Sektor (5, 7) verbunden ist, und ein zweites Element (19) umfasst, das beweglich mit dem anderen Element, dem Zentralkörper (2) oder dem Sektor (5, 7), verbunden ist und einen ersten Abschnitt (25) und einen zweiten Abschnitt (26) umfasst,
Ändern der Ablagefläche (3, 4, 6) durch Entfernen der Sektoren (5, 7) von dem Zentralkörper (2) und Einsetzen neuer Sektoren (5, 7) auf dem Zentralkörper (2);
wobei das Entfernen der Sektoren (5, 7) von dem Zentralkörper (2) für jeden Sektor (5, 7) umfasst:
Bewegen des zweiten Abschnitts (26) des zweiten Elements (19) axial weg vom ersten Element (18), Lösen des ersten Elements (18) vom ersten Abschnitt (25) des zweiten Elements (19) und Entfernen des Sektors (5, 7) vom Zentralkörper (2);
wobei das Einsetzen neuer Sektoren (5, 7) auf dem Zentralkörper (2) für jeden neuen Sektor (5, 7) umfasst:
Bringen des neuen Sektors (5, 7) in Richtung des Zentralkörpers (2), Bewegen des ersten Elements (18), um es in Eingriff mit dem ersten Abschnitt (25) des zweiten Elements (19) zu bringen, Bringen des zweiten Abschnitts (26) des zweiten Elements (19) axial in Richtung des ersten Elements (18), bis das erste Element (18) arretiert ist.

10. Verfahren nach Anspruch 9, wobei das Lösen des ersten Elements (18) von dem ersten Abschnitt (25) des zweiten Elements (19) das Drehen des ersten Elements (18) um eine axiale Richtung aus einem jeweiligen Haltezustand des ersten Elements (18) umfasst, in dem es mit dem ersten Abschnitt (25) des zweiten Elements (19) in Eingriff kommt und den Sektor (5, 7) radial an dem Zentralkörper (2) hält bis zu einem jeweiligen Freigabezustand, in dem es von dem ersten Abschnitt (25) des zweiten Elements (19) gelöst ist und den Sektor (5, 7) radial von dem Zentralkörper (2) freigibt, und wobei das In-Eingriff Bringen des ersten Elements (18) mit dem ersten Abschnitt (25) des zweiten Elements (19) ein Drehen des ersten Elements (18) um eine axiale Richtung aus einem jeweiligen Freigabezustand umfasst, in dem es von dem ersten Abschnitt (25) des zweiten Elements (19) gelöst ist, bis zu einem entsprechenden Haltezustand, in dem es mit dem ersten Abschnitt (25) des zweiten Elements (19) in Eingriff steht und den neuen Sektor (5, 7) radial an dem zentralen Körper (2) hält.

11. Verfahren nach einem der Ansprüche 9 bis 10, wobei das Bewegen des zweiten Abschnitts (26) des zweiten Elements (19) axial weg von dem ersten Element (18) das axiale Bewegen des zweiten Elements (19) aus einem jeweiligen Haltezustand umfasst, wobei der zweite Abschnitt (26) das erste Element (18) in einem jeweiligen Haltezustand bis zu einem jeweiligen Freigabezustand arretiert, in dem der zweite Abschnitt (26) axial von dem ersten Element (18) weggebracht wird und dem ersten Element (18) erlaubt, einen jeweiligen Freigabezustand zu erreichen, und wobei das axiale Heranführen des zweiten Abschnitts (26) des zweiten Elements (19) an das erste Element (18), bis das erste Element (18) arretiert ist, ein axiales Bewegen des zweiten Elements (19) aus einem jeweiligen Freigabezustand umfasst, wobei der zweite Abschnitt (26) des zweiten Elements (19) axial von dem ersten Element (18) beabstandet ist, bis zu einem jeweiligen Haltezustand, in dem der zweite Abschnitt (26) des zweiten Elements (19) das erste Element (18) in einem jeweiligen Haltezustand arretiert.

12. Verfahren nach einem der Ansprüche 9 bis 11, wobei das Heranführen des neuen Sektors (5, 7) an den Zentralkörper (2) umfasst: Anordnen eines Abstandshalters (31) auf einer radial inneren Oberfläche (5a) des neuen Sektors, Ausstatten des Abstandshalters (31) mit mindestens einer Anlagefläche (31a), die von der radial inneren Oberfläche des Sektors entfernt ist, und Inkontaktbringen der Anlagefläche (31a) des Abstandshalters (31) mit einer Anlagefläche (2b) des Zentralkörpers (2), und wobei das Entfernen des Sektors (5, 7) von dem Zentralkörper (2) umfasst: Anordnen eines Abstandshalters (31) auf einer radial inneren Oberfläche (5a) des Sektors, Ausstatten des Abstandshalters (31) mit mindestens einer Anlagefläche (31a), die von der radial inneren Oberfläche des Sektors (5, 7) entfernt ist, und Entfernen der Anlagefläche (31a) des Abstandshalters (31) von einer Anlagefläche (2b) des Zentralkörpers (2).

13. Verfahren nach einem der Ansprüche 9 bis 12, wobei das Lösen des ersten Elements (18) von dem ersten Abschnitt (25) des zweiten Elements (19) umfasst: Anordnen des ersten Elements (18) mit einem Schlitz (23) von gewölbter Form und offen an einem ersten Ende (23a), Drehen des ersten Elements (18), so dass der erste Abschnitt (25) des zweiten Elements (19) aus dem Schlitz (23) herauskommt, und wobei das In-Eingriff-Bringen des ersten Elements (18) mit dem ersten Abschnitt (25) des zweiten Elements (19) das Anordnen des ersten Elements (18) mit einem Schlitz (23) von gewölbter Form und offen an einem ersten Ende (23a), das Drehen des ersten Elements (18), so dass der erste Abschnitt (25) des zweiten Elements (19) in den Schlitz (23) eintritt, umfasst.

14. Verfahren nach Anspruch 13, wobei die Drehung des ersten Elements (18), damit der Schlitz (23) aus dem ersten Abschnitt (25) des zweiten Elements (19) herauskommt, in der entgegengesetzten Winkelrichtung zur Drehung des ersten Elements (18) ausgeführt wird, um den ersten Abschnitt (25) des zweiten Elements (19) in den Schlitz (23) einzuführen.

15. Verfahren nach einem der Ansprüche 9 bis 14, wobei das axiale Heranbringen des zweiten Abschnitts (26) des zweiten Elements (19) an das erste Element (18) umfasst: Anordnen des zweiten Abschnitts (26) des zweiten Elements (19) mit einem Kopf (29) und Bringen des Kopfes (29) in axiale Anlage gegen das erste Element (18) und wobei das Bewegen des zweiten Abschnitts (26) des zweiten Elements (19) axial weg von dem ersten Element (18) das Anordnen des ersten Abschnitts (25) des zweiten Elements (19) mit einem Stift (27), der eine mit einem Gewinde versehene Außenfläche (27a) aufweist, und das teilweise Herausdrehen des Stifts (27) aus einem Sitz (28) umfasst.

## Revendications

1. Tambour de formage (1) pour la production de pneus destinés à des roues de véhicules comprenant :
un arbre central (2a) concentrique à un axe de rotation géométrique (X) du tambour de formage (1) ;
une pluralité de secteurs (5, 7) disposés circonférentiellement autour de l'arbre central (2a) pour définir au moins une surface de dépôt (3, 4, 6) ;
un corps central (2) raccordé à l'arbre central (2a) et à la pluralité de secteurs (5, 7) pour mettre les secteurs (5, 7) en rotation autour de l'arbre central (2a) ;
des éléments d'accouplement (17) fonctionnant entre chaque secteur (5, 7) de la pluralité de secteurs (5, 7) et le corps central (2) conçus pour maintenir et libérer chaque secteur (5, 7) du corps central (2) ; **caractérisé en ce que**
chaque élément d'accouplement (17) comprend un premier élément (18) raccordé de manière mobile à l'un parmi le corps central (2) et le secteur (5, 7) et un deuxième élément (19) raccordé de manière mobile à l'autre parmi le corps central (2) et le secteur (5, 7) et comprenant une première partie (25) et une deuxième partie (26) ;
dans lequel le premier élément (18) est conçu pour se déplacer entre un état de maintien dans lequel il met en prise la première partie (25) du deuxième élément (19) et maintient radialement le secteur (5, 7) sur le corps central (2) et un état de libération dans lequel il est désengagé de la première partie (25) du deuxième élément (19) et libère radialement le secteur (5, 7) du corps central (2) ;
et le deuxième élément (19) est conçu pour se déplacer entre un état de maintien dans lequel la deuxième partie (26) verrouille le premier élément (18) dans l'état de maintien respectif et un état de libération dans lequel la deuxième partie (26) est éloignée axialement du premier élément (18) et permet au premier élément (18) d'atteindre l'état de libération respectif.

2. Tambour de formage (1) selon la revendication 1, dans lequel le premier élément (18) se déplace sur un plan radial entre l'état de maintien et l'état de libération et entre l'état de libération et l'état de maintien pour mettre en prise et désengager la première partie (25) du deuxième élément (19) ; le premier élément (18) effectuant une rotation autour d'une direction axiale pour passer de l'état de maintien à l'état de libération et pour passer de l'état de libération à l'état de maintien.

3. Tambour de formage (1) selon l'une quelconque des revendications précédentes, dans lequel la première partie (25) du deuxième élément (19) est conçue pour se déplacer axialement et pour déplacer la deuxième partie (26) du deuxième élément (19) entre l'état de maintien et l'état de libération.

4. Tambour de formage (1) selon l'une quelconque des revendications précédentes, dans lequel le premier élément (18) comprend une première partie (20) raccordée de manière rotative à l'un parmi le corps central (2) et le secteur (5, 7) et une deuxième partie (22) distale de la première partie (20) conçue pour décrire un trajet en arc de cercle pendant le passage de l'état de libération à l'état de maintien et pour intercepter la première partie (25) du deuxième élément (19) ; la première partie (25) du deuxième élément (19) comprenant une goupille (27) qui s'étend dans la direction axiale et la deuxième partie (26) du deuxième élément (19) comprenant une tête (29) disposée à une extrémité de la goupille (27) ; la taille dans la direction radiale de la tête (29) étant supérieure à la taille dans la direction radiale de la goupille (27).

5. Tambour de formage (1) selon la revendication 4, dans lequel la deuxième partie (22) du premier élément (18) comprend une fente (23) de forme arquée et ouverte à une première extrémité (23a) conçue pour loger la goupille (27) du deuxième élément (19) lorsque le premier élément (18) est dans l'état de maintien ; la tête (29) du deuxième élément (19) étant en contact avec des bords de la fente (23) lorsque le premier élément (18) et le deuxième élément (19) sont dans les états de maintien respectifs.

6. Tambour de formage (1) selon l'une quelconque des revendications précédentes, dans lequel le premier élément (18) est raccordé de manière mobile au secteur (5, 7) et dans lequel le deuxième élément (19) est raccordé de manière mobile au corps central (2).

7. Tambour de formage (1) selon l'une quelconque des revendications précédentes, dans lequel chaque secteur (5, 7) comprend au moins une entretoise (31) qui s'étend en s'éloignant d'une surface radialement intérieure (5a) du secteur (5, 7) ; le premier élément (18) des éléments d'accouplement (17) étant accouplé de manière mobile sur au moins une entretoise (31) de chaque secteur (5, 7) ; l'entretoise (31) comprenant deux épaulements (32) et une surface de raccordement (33) disposée entre les deux épaulements (32) ; la surface de raccordement (33) est conçue pour recevoir la première partie (25) du deuxième élément (19) des éléments d'accouplement (17) entre les deux épaulements (32) ; dans lequel, lorsque le premier élément (18) et le deuxième élément (19) des éléments d'accouplement (17) sont dans les états de maintien respectifs, la deuxième partie (26) du deuxième élément (19) appuie axialement le premier élément (18) contre les deux épaulements (32) de l'entretoise (31).

8. Tambour de formage (1) selon l'une quelconque des revendications précédentes, dans lequel la première partie (25) du deuxième élément (19) comprend une surface extérieure filetée (27a) et vissée avec une profondeur d'insertion dans un siège (28) formé dans le corps central (2) ; le passage de l'état de libération à l'état de maintien du deuxième élément (19) étant effectué par augmentation de la profondeur d'insertion de la première partie (25) du deuxième élément (19) dans le siège (28) du corps central (2) ; la deuxième partie (26) du deuxième élément (19) étant conçue pour réguler la profondeur d'insertion de la première partie (25) du deuxième élément (19) dans le siège (28) formé dans le corps central (2).

9. Procédé de modification de la géométrie d'un tambour de formage (1) pour la production de pneus destinés à des roues de véhicules comprenant :
la disposition d'une surface de dépôt (3, 4, 6) à travers des secteurs (5, 7) disposés circonférentiellement autour d'un arbre central (2a) et accouplés de manière démontable à un corps central (2) ;
la disposition d'éléments d'accouplement (17) pour chaque secteur (5, 7) comprenant un premier élément (18) raccordé de manière mobile à l'un parmi le corps central (2) et le secteur (5, 7) et un deuxième élément (19) raccordé de manière mobile à l'autre parmi le corps central (2) et le secteur (5, 7) et comprenant une première partie (25) et une deuxième partie (26) ;
la modification de la surface de dépôt (3, 4, 6) par retrait des secteurs (5, 7) du corps central (2) et insertion de nouveaux secteurs (5, 7) sur le corps central (2) ;
dans lequel le retrait des secteurs (5, 7) du corps central (2) comprend pour chaque secteur (5, 7) :
le déplacement de la deuxième partie (26) du deuxième élément (19) axialement éloignement du premier élément (18), le désengagement du premier élément (18) de la première partie (25) du deuxième élément (19) et l'éloignement du secteur (5, 7) du corps central (2) ;
et dans lequel l'insertion de nouveaux secteurs (5, 7) sur le corps central (2) comprend pour chaque nouveau secteur (5, 7) :
le rapprochement du nouveau secteur (5, 7) du corps central (2), le déplacement du premier élément (18) pour le mettre en prise avec la première partie (25) du deuxième élément (19), le rapprochement de la deuxième partie (26) du deuxième élément (19) axialement vers le premier élément (18) jusqu'à ce que le premier élément (18) soit verrouillé.

10. Procédé selon la revendication 9, dans lequel le désengagement du premier élément (18) de la première partie (25) du deuxième élément (19) comprend la rotation du premier élément (18) autour d'une direction axiale à partir d'un état de maintien respectif du premier élément (18) dans lequel il met en prise la première partie (25) du deuxième élément (19) et maintient radialement le secteur (5, 7) sur le corps central (2) jusqu'à un état de libération respectif dans lequel il est désengagé de la première partie (25) du deuxième élément (19) et libère radialement le secteur (5, 7) du corps central (2) et dans lequel la mise en prise du premier élément (18) dans la première partie (25) du deuxième élément (19) comprend la rotation premier élément (18) autour d'une direction axiale à partir d'un état de libération respectif dans lequel il est désengagé de la première partie (25) du deuxième élément (19) jusqu'à un état de maintien respectif dans lequel il met en prise la première partie (25) du deuxième élément (19) et maintient radialement le nouveau secteur (5, 7) sur le corps central (2).

11. Procédé selon l'une quelconque des revendications 9 et 10, dans lequel le déplacement de la deuxième partie (26) du deuxième élément (19) en éloignement axial du premier élément (18) comprend le déplacement axial du deuxième élément (19) d'un état de maintien respectif dans lequel la deuxième partie (26) verrouille le premier élément (18) dans un état de maintien respectif jusqu'à un état de libération respectif dans lequel la deuxième partie (26) est éloignée axialement du premier élément (18) et permet au premier élément (18) d'atteindre un état de libération respectif et dans lequel le rapprochement de la deuxième partie (26) du deuxième élément (19) axialement vers le premier élément (18) jusqu'à ce que le premier élément (18) soit verrouillé comprend le déplacement axial du deuxième élément (19) à partir d'un état de libération respectif dans lequel la deuxième partie (26) du deuxième élément (19) est éloignée axialement du premier élément (18) jusqu'à un état de maintien respectif dans lequel la deuxième partie (26) du deuxième élément (19) verrouille le premier élément (18) dans un état de maintien respectif.

12. Procédé selon l'une quelconque des revendications 9 à 11, dans lequel le rapprochement du nouveau secteur (5, 7) vers le corps central (2) comprend la disposition d'une entretoise (31) sur une surface radialement intérieure (5a) du nouveau secteur, l'équipement de l'entretoise (31) avec au moins une surface de butée (31a), distale de la surface radialement intérieure du secteur, et la mise en contact de la surface de butée (31a) de l'entretoise (31) avec une surface de butée (2b) du corps central (2) et dans lequel l'éloignement du secteur (5, 7) du corps central (2) comprend la disposition d'une entretoise (31) sur une surface radialement intérieure (5a) du secteur, l'équipement de l'entretoise (31) avec au moins une surface de butée (31a), distale de la surface radialement intérieure du secteur (5, 7), et l'éloignement de la surface de butée (31a) de l'entretoise (31) d'une surface de butée (2b) du corps central (2).

13. Procédé selon l'une quelconque des revendications 9 à 12, dans lequel le désengagement du premier élément (18) de la première partie (25) du deuxième élément (19) comprend la disposition du premier élément (18) avec une fente (23) de forme arquée et ouverte à une première extrémité (23a), la rotation du premier élément (18) de sorte que la première partie (25) du deuxième élément (19) sorte de la fente (23) et dans lequel la mise en prise du premier élément (18) avec la première partie (25) du deuxième élément (19) comprend la disposition du premier élément (18) avec une fente (23) de forme arquée et ouverte à une première extrémité (23a), la rotation du premier élément (18) de sorte que la première partie (25) du deuxième élément (19) s'insère dans la fente (23).

14. Procédé selon la revendication 13, dans lequel la rotation du premier élément (18) pour faire sortir la fente (23) de la première partie (25) du deuxième élément (19) est effectuée dans la direction angulaire opposée à la rotation du premier élément (18) pour insérer la première partie (25) du deuxième élément (19) à l'intérieur de la fente (23).

15. Procédé selon l'une quelconque des revendications 9 à 14, dans lequel le rapprochement axial de la deuxième partie (26) du deuxième élément (19) vers le premier élément (18) comprend la disposition de la deuxième partie (26) du deuxième élément (19) avec une tête (29) et la mise de la tête (29) en butée axiale contre le premier élément (18) et dans lequel l'éloignement axial de la deuxième partie (26) du deuxième élément (19) du premier élément (18) comprend la disposition de la première partie (25) du deuxième élément (19) avec une goupille (27) ayant une surface extérieure filetée (27a) et le dévissage partiel de la goupille (27) à partir d'un siège (28).
